(19) Europäisches Patentamt

European Patent Office

Office européen des brevets

(11) **EP 4 554 262 A1**

(12) **EUROPEAN PATENT APPLICATION**
published in accordance with Art. 153(4) EPC

(43) Date of publication:
**14.05.2025 Bulletin 2025/20**

(21) Application number: **23834921.1**

(22) Date of filing: **06.07.2023**

(51) International Patent Classification (IPC):
***H04W 8/00*** (2009.01)

(52) Cooperative Patent Classification (CPC):
**G06F 21/60; G06F 21/62; G06N 20/00;**
**H04L 41/14; H04W 8/00**

(86) International application number:
**PCT/CN2023/106114**

(87) International publication number:
**WO 2024/008154 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.07.2022 CN 202210815546**

(71) Applicant: **Vivo Mobile Communication Co., Ltd.**
**Dongguan, Guangdong 523863 (CN)**

(72) Inventor: **CHENG, Sihan**
**Dongguan, Guangdong 523863 (CN)**

(74) Representative: **Lavoix**
**Bayerstraße 83**
**80335 München (DE)**

(54) **FEDERATED LEARNING METHOD AND APPARATUS, COMMUNICATION DEVICE, AND READABLE STORAGE MEDIUM**

(57)    This application discloses a federated learning method and apparatus, a communication device, and a readable storage medium, and pertains to the field of communication technologies. The federated learning method of embodiments of this application includes: receiving, by a first communication device, first information from a second communication device, where the first information includes at least one of the following: second information used for indicating whether the second communication device agrees to participate in federated learning, status information of the second communication device in a current round of federated learning, and model performance information of a current round of federated learning; and determining, based on the first information, whether the second communication device participates in a next round of federated learning.

FIG. 4

# Description

## CROSS-REFERENCE TO RELATED APPLICATIONS

This application claims priority to Chinese Patent Application No. 202210815546.7, filed in China on July 8, 2022, which is incorporated herein by reference in its entirety.

## TECHNICAL FIELD

This application pertains to the field of communication technologies, and specifically relates to a federated learning method and apparatus, a communication device, and a readable storage medium.

## BACKGROUND

In relevant communication networks, to improve model performance, model training can be performed based on federated learning. However, during federated learning, clients participating in federated learning may become unwilling to participate in federated learning for various reasons such as the arrival of other more important tasks, wish to leave federated learning because of having too many tasks to handle, no longer be willing to take part in it, or no longer be suitable clients for federated learning. In this case, how to reasonably select clients to participate in federated learning is an issue that urgently needs to be solved.

## SUMMARY

Embodiments of this application provide a federated learning method and apparatus, a communication device, and a readable storage medium, which can solve the issue of how to reasonably select clients to participate in federated learning.

According to a first aspect, a federated learning method is provided and includes:

receiving, by a first communication device, first information from a second communication device, where the first information includes at least one of the following: second information used for indicating whether the second communication device agrees to participate in federated learning, status information of the second communication device in a current round of federated learning, and model performance information of a current round of federated learning; and

determining, by the first communication device based on the first information, whether the second communication device participates in a next round of federated learning.

According to a second aspect, a federated learning method is provided and includes:

determining, by a second communication device, first information, where the first information includes at least one of the following: second information used for indicating whether the second communication device agrees to participate in federated learning, status information of the second communication device in a current round of federated learning, and model performance information of a current round of federated learning; and

sending, by the second communication device, the first information to a first communication device, where the first information is used for the first communication device to determine whether the second communication device participates in a next round of federated learning.

According to a third aspect, a federated learning apparatus is provided, applied to a first communication device, and includes:

a first receiving module, configured to receive first information from a second communication device, where the first information includes at least one of the following: second information used for indicating whether the second communication device agrees to participate in federated learning, status information of the second communication device in a current round of federated learning, and model performance information of a current round of federated learning; and

a first determining module, configured to determine, based on the first information, whether the second communication device participates in a next round of federated learning.

According to a fourth aspect, a federated learning apparatus is provided, applied to a second communication device, and includes:

a second determining module, configured to determine first information, where the first information includes at least one of the following: second information used for indicating whether a second communication device agrees to participate in federated learning, status information of the second communication device in a current round of federated learning, and model performance information of a current round of federated learning; and

a second sending module, configured to send the first information to a first communication device, where the first information is used for the first communication device to determine whether the second communication device participates in a next round of federated learning.

According to a fifth aspect, a communication device is provided and includes a processor and a memory, where the memory stores a program or instructions capable of running on the processor, and when the program or instructions are executed by the processor, the steps of the method according to the first aspect are implemented, or the steps of the method according to the second aspect are implemented.

According to a sixth aspect, a communication device is provided and includes a processor and a communication interface, where when the communication device is, for example, a first communication device, the communication interface is configured to receive first information from a second communication device, and the processor is configured to determine, based on the first information, whether the second communication device participates in a next round of federated learning; or when the communication device is, for example, a second communication device, the processor is configured to determine first information, and the communication interface is configured to send the first information to the first communication device; where the first information includes at least one of the following: second information used for indicating whether the second communication device agrees to participate in federated learning, status information of the second communication device in a current round of federated learning, and model performance information of a current round of federated learning.

According to a seventh aspect, a communication system is provided and includes the first communication device and the second communication device as described above, where the first communication device is capable of being configured to execute the steps of the federated learning method according to the first aspect, and the second communication device is capable of being configured to execute the steps of the federated learning method according to the second aspect.

According to an eighth aspect, a readable storage medium is provided, where the readable storage medium stores a program or instructions thereon, and when the program or the instructions are executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or instructions to implement the steps of the method according to the first aspect, or to implement the steps of the method according to the second aspect.

According to a tenth aspect, a computer program/program product is provided, where the computer program/program product is stored in a storage medium, and the computer program/program product is executed by at least one processor to implement the steps of the method according to the first aspect, or to implement the steps of the method according to the second aspect.

In the embodiments of this application, first information may be received from a second communication device, and, whether the second communication device participates in a next round of federated learning is determined based on the first information; where the first information includes at least one of the following: second information used for indicating whether the second communication device agrees to participate in federated learning, status information of the second communication device in a current round of federated learning, and model performance information of a current round of federated learning. Therefore, whether the second communication device participates in the next round of federated learning may be determined in combination with the intention, status information, and/or model performance of the second communication device, so as to achieve a rational selection of clients participating in federated learning.

## BRIEF DESCRIPTION OF DRAWINGS

FIG. 1 is a block diagram of a wireless communication system to which embodiments of this application are applicable;
FIG. 2 is a schematic diagram of a neural network according to an embodiment of this application;
FIG. 3 is a schematic diagram of a neuron according to an embodiment of this application;
FIG. 4 is a flowchart of a federated learning method according to an embodiment of this application;
FIG. 5 is a flowchart of another federated learning method according to an embodiment of this application;
FIG. 6 is a schematic diagram of a federated learning process according to an embodiment of this application;
FIG. 7 is a schematic structural diagram of a federated learning apparatus according to an embodiment of this application;
FIG. 8 is a schematic structural diagram of another federated learning apparatus according to an embodiment of this application;
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6$^{th}$ Generation, 6G) communication system.

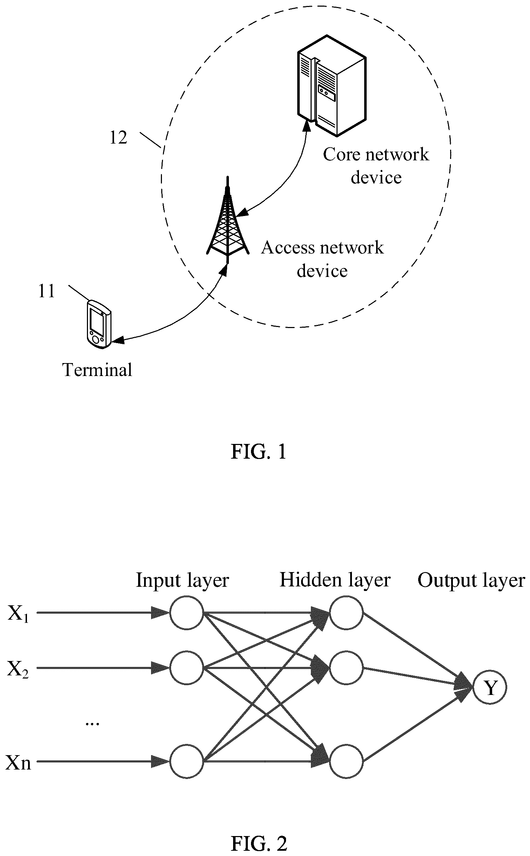

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home (home devices with a wireless communication function, for example, a refrigerator, a television, a washing machine, or a furniture), a game console, a personal computer (personal computer, PC), a teller machine or self-service machine. The wearable device includes a smart watch, a smart wristband, a smart headset, a smart glasses, a smart jewelry (smart bracelet, smart chain bracelet, smart ring, smart necklace, smart anklet, smart chain anklet), a smart wriststrap, and a smart clothing. It should be noted that the embodiments of this application do not impose any limitation on a specific type of the terminal 11. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or another appropriate term in the art. Provided that the same technical effect is achieved, the base station is not limited to a specific technical term. It should be noted that the base station in the NR system is only used as an example in the embodiments of this application for illustration, but the base station is not limited to any specific type. The core network device may include but is not limited to at least one of the following: a network data analytics function (Network Data Analytic Function, NWDAF), a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

Optionally, in the embodiments of this application, the network data analytics function NWDAF may be split into two network elements, namely, model training logical function (Model Training Logical Function, MTLF) and analytics logical function (Analytics Logical Function, AnLF). The model training logical function MTLF is mainly configured for generating a model and performing model training, and it may be either a central server (server) in federated learning or a client (clients) in federated learning. The analytics logical function AnLF is mainly configured for ratiocinating to generate prediction information or a model and may request a model from the MTLF, where the model may be generated through federated learning.

Optionally, the model in the embodiments of this application may be an artificial intelligence (Artificial Intelligence, AI) model. The AI model may be implemented using various algorithms, for example, a neural network, a decision tree, a support vector machine, and a Bayesian classifier. This application uses a neural network as an example for explanation, but the AI model is not limited to any specific type.

For example, FIG. 2 is schematic diagram of a neural network, where $X_1$, $X_2$...$X_n$ are input values, Y is an output result, and each "○" represents a neuron in which computation takes place, with the result continued to be passed to the next layer. The input layer, hidden layer, and output layer composed of these numerous neurons constitute a neural network. The number of hidden layers and the number of neurons in each layer constitute the "network structure" of the neural network.

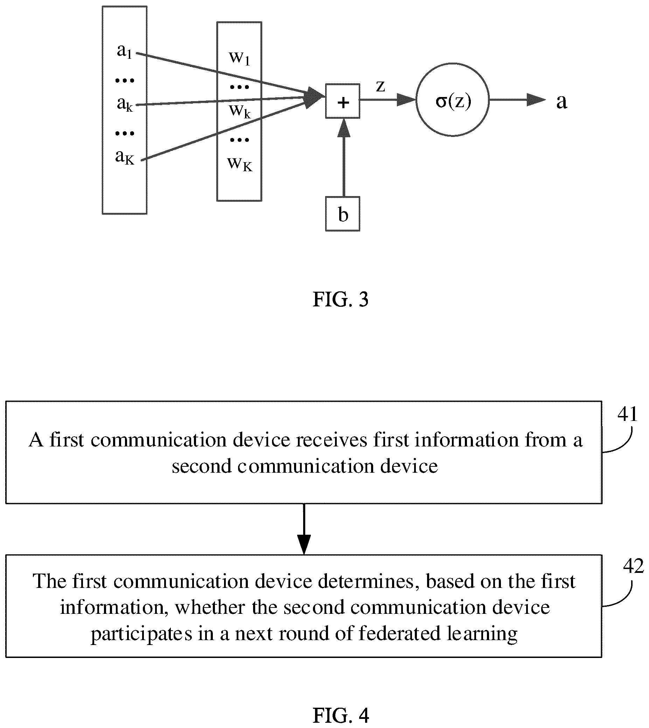

For another example, a neural network is composed of neurons, and FIG. 3 is a schematic diagram of a neuron, where $a_1$, $a_k$...$a_k$ (that is, X1, X2...shown in FIG. 2) are inputs, w is a weight (also called multiplicative coefficient), b is a bias (also called additive coefficient), $\sigma$() is an activation function, and z is an output value. The corresponding computational process may be expressed as:

$$Z = a_1 w_1 + \cdots + a_k w_k + \cdots + a_K w_K + b.$$

Common activation functions include but are not limited to a Sigmoid function, a hyperbolic tangent tanh function, and a rectified linear unit (Rectified Linear Unit, ReLU). The combination of parameter information of all neurons and the algorithms used constitutes the "parameter information" of the entire neural network, which is also a crucial part of the AI model file.

In practical use, an AI model refers to a file that contains elements such as network structure and parameter information. A trained AI model may be directly reused by its framework platform without the need for repetitive construction or learning, and may directly perform intelligent functions such as judgment and/or recognition.

Federated learning aims to establish a federated learning model based on distributed datasets. During the process of model training, model-related information may be exchanged between parties (or in encrypted form), but the original data cannot be exchanged. This exchange does not expose any protected private parts of the data on each training node.

Optionally, the federated learning in the embodiments of this application is horizontal federated learning. The essence of horizontal federated learning is the union of samples, which is suitable for scenarios in which participants have the same service formats but different customers, meaning that those scenarios have many overlapping features but few overlapping users. For example, the CN domain and RAN domain in a communication network serve the same service for different users (for example, all UEs, that is, different samples), for example, mobility management (Mobility Management, MM) service, session management (Session Management, SM) service, or a particular service. By combining the same data features of different samples from participants, horizontal federated learning increases the number of training samples, thereby obtaining a better model.

In the embodiments of this application, a server (server, also referred to as central server or organizer) in federated learning may be a network element device in the network, for example, MTLF split from NWDAF. Clients (client, also referred to as participant) participating in federated learning may be network element devices in the network, for example, MTLFs split from NWDAF, or may be terminals. During federated learning, the server in federated learning may first select clients to participate in federated learning, for example, by sending requests to information storage network elements such as NRFs to request to obtain capability information of intelligent network element devices such as all MTLFs, matching their capability information to determine whether they can participate in federated learning; and then sending initialization model information and other information about federated learning to the selected clients. After local model training, all clients feed back intermediate results such as gradients to the server. Subsequently, the server aggregates the received intermediate results and updates the global model. The steps of client selection - model distribution - local model training - intermediate result feedback - aggregation and global model update are repeated multiple times, and model training can be stopped once the model converges.

The federated learning method and apparatus, communication device, and readable storage medium according to the embodiments of this application are described below in detail through some embodiments and application scenarios with reference to the accompanying drawings.

Referring to FIG. 4, FIG. 4 is a flowchart of a federated learning method according to an embodiment of this application. The method is applied to a first communication device, where the first communication device specifically is a server (server) in federated learning, including but not limited to an intelligent network element device such as MTLF. As shown in FIG. 4, the method includes the following steps.

Step 41. The first communication device receives first information from a second communication device.

Step 42. The first communication device determines, based on the first information, whether the second communication device participates in a next round of federated learning.

In this embodiment, the first information includes but is not limited to at least one of the following: second information used for indicating whether a second communication device agrees to participate in federated learning, status information of the second communication device in a current round of federated learning, and model performance information of a current round of federated learning. For example, the second information is optionally information used for indicating willingness of whether the second communication device is willing to participate in federated learning.

Additionally, the first information may also include capability information of the second communication device. For example, this capability information is capability information after termination of the current round of model training, including but not limited to whether the second communication device can still be a participant (client) in federated learning, and precision information for participation in model training. For example, after a round of local training is terminated, the capability information of a client is: being able to be a participant in federated learning, having the capability to perform local training, and precision information for participation in model training being X.

The second communication device specifically is a client (client) device in federated learning, including but not limited to a terminal and an intelligent network element device such as MTLF.

In some embodiments, the first information may be proactively reported by the second communication device (that is, client in federated learning), for example, fed back to a server in federated learning together with a result of local training, so as to reduce signaling consumption and the number of interactions.

In some embodiments, when a client in federated learning is no longer willing to participate in federated learning, for example, receiving a more important task and thus no longer willing to participate in federated learning or having too many tasks to handle and thus wanting to leave federated learning, the client may feed back information indicating its unwillingness to participate in federated learning, that is, the willingness information to leave federated learning, to the server in federated learning to assist in client selection during the process of federated learning, thereby achieve rational selection of clients participating in federated learning. If the client is willing to continue participating in federated learning, it may not need to feed back information indicating its agreement to participate in federated learning, because the server in this case will assume that the client is willing to continue participating in federated learning. Additionally, clients in federated learning may directly indicate to the server their willingness to participate in federated learning.

In some other embodiments, when statuses of clients in federated learning change (for example, load increases), the computing power required for local model training may become insufficient, making the clients unsuitable to be selected as clients in a next round of federated learning. Therefore, the clients in federated learning may send their status information for the current round of federated learning to the server in federated learning, and the server determines whether the clients will participate in the next round of federated learning, thereby assisting in client selection during the process of federated learning, achieving rational selection of clients participating in federated learning, and improving training efficiency, for example, avoiding the straggling of clients whose status has deteriorated (for example, avoiding situations in which clients with deteriorating status do not feed back results within a specified time), and selecting clients who can bring higher efficiency.

In some other embodiments, because data of clients in federated learning have been learned multiple times or have been converged into the global model of federated learning, the global model may overfit in the environment of a client, making this client no longer suitable to be selected as a client in the next round of federated learning. Therefore, training on this client may be paused for several rounds to achieve faster model convergence. Therefore, clients in federated learning may send their model performance information for the current round of federated learning to the server in federated learning, and the server determine whether the client will participate in the next round of federated learning, thereby assisting in client selection during the process of federated learning, achieving rational selection of clients participating in federated learning, and improving training efficiency, for example, avoiding the straggling of clients whose status has deteriorated (for example, avoiding situations in which clients with deteriorating status do not feed back results within a specified time), and selecting clients who can bring higher efficiency.

Optionally, after receiving the first information, the first communication device may further select, based on the first information, a third communication device to participate in the next round of federated learning. The third communication device is different from the second communication device, and specifically is a new client (client) device participating in federated learning, including but not limited to a terminal and an intelligent network element device such as MTLF. For example, if it is determined based on the received first information that many client devices are no longer suitable for participating in the next round of federated learning, new clients may be selected to participate in the next round of federated learning, so as to ensure the smooth progress of federated learning.

In this embodiment of this application, the status information may be used for describing the status information of the second communication device (that is, client in federated learning) after completion of local training in the current round of federated learning, including but not limited to at least one of the following:

(1) Load information of the second communication device in the current round of federated learning.

In this embodiment, the load information may be understood as load condition information, which may represent a load condition of a network element such as a network function (Network Function, NF).

Optionally, the load information may include at least one of the following: average load information, peak load information, and the like. The average load information may be understood as an average load value within the scope of the current round of federated learning. For example, during a round of local training, the average load of a client is 70%, and the peak load is 80%.

(2) Resource usage information of the second communication device in the current round of federated learning.

In this embodiment, the resource usage information may be understood as resource usage condition information.

Optionally, the resource usage information may include at least one of the following: average resource usage information and peak resource usage information. The average resource usage information may be understood as an average resource usage condition within the scope of the current round of federated learning.

For example, a resource usage (for example, resource usage) side corresponding to the resource usage information may include but is not limited to a central processing unit (Central Processing Unit, CPU), a memory (memory), a disk (disk), and a graphics processing unit (Graphics Processing Unit, GPU). The resource usage information may include power information.

For example, during a round of local training, the average resource usage condition of a client is: CPU usage 60%, GPU usage 80%, memory usage 70% (for example, occupying 12GB, expressed in numerical terms), and disk space usage 40%; and the peak resource usage condition of the client is: CPU usage 80%, GPU usage 100%, memory usage 80% (for example, occupying 14GB, expressed in numerical terms), and disk space usage 50%.

In this embodiment of this application, the model performance information may be optionally model performance information before and/or after local model training, and may include at least one of the following:

first model performance information after completion of local model training; and
second model performance information before start of local model training.

Optionally, the model performance information may include at least one of the following: accuracy and mean absolute error (Mean Absolute Error, MAE). Additionally, it may also include but is not limited to at least one of the following: precision (Precision), recall (Recall), F1 score (F1 score), area under curve (Area Under Curve, AUC), sum of squares due to error (Sum of Squares due to Error, SSE), variance, mean squared error (Mean Squared Error, MSE), variance, root mean squared error (Root Mean Squared Error, RMSE), standard deviation, and coefficient of determination (R-Squared).

In some embodiments, the first model performance information may include accuracy, mean absolute error MAE, or the like. The second model performance information may include accuracy, mean absolute error MAE, or the like.

It can be understood that the first model performance information is mainly used for describing the performance of the model based on its local data after the completion of the local model training of the current round of federated learning, and may include a certain statistical parameter and a value corresponding to this parameter, for example, accuracy of the model and its specific value (for example, 80%), and mean absolute error MAE and its value (for example, 0.1). The second model performance information is mainly used for describing the performance of the model based on its local data before the start of the local model training of the current round of federated learning, meaning a statistical computing of model performance needs to be performed after the model is received, and may include a certain statistical computing parameter and a value corresponding to this parameter, for example, accuracy of the model and its specific value (for example, 70%), and mean absolute error MAE and its value (for example, 0.15).

It should be noted that accuracy refers to a percentage of the number of correct predictions to the total number of predictions. During the model training phase, the dataset includes input data and labels (label data), which have a corresponding relationship. One set of input data corresponds to one label or one group of labels. By comparing the predicted value generated by the model with the labels corresponding to the training, it is determined whether the training is correct. The mean absolute error MAE represents an average value of absolute errors between predicted values and actual values, computed as:

$$\text{MAE}(X, h) = \frac{1}{m}\sum_{i=1}^{m} |h(x_i) - y_i|$$

where $h(x_i)$ represents a predicted value of the model, $y_i$ represents a corresponding actual value, and m represents the number of training samples.

In this embodiment of this application, whether the second communication device feeds back the first information may be determined by the first communication device. Optionally, the first communication device may send third information to the second communication device, where the third information is used for indicating that the second communication device needs to feed back the first information. If the first communication device has not sent the third information, in other words, the second communication device has received the third information, the second communication device does not need to feed back the first information.

Optionally, the third information may include but is not limited to at least one of the following:

information used for indicating that the second communication device needs to feed back the second information, for example, the information is a flag indicating that the second information needs to be fed back;
information used for indicating that the second communication device needs to feed back the status information, for example, the information is a flag indicating that status information needs to be fed back; and
information used for indicating that the second communication device needs to feed back model performance information, for example, the information includes a flag indicating that the model performance information after completion of local model training needs to be fed back, and/or a flag indicating that the model performance information before start of local model training needs to be fed back.

It should be noted that the information used for indicating that the second communication device needs to feed back status information is mainly used for describing that the second communication device needs to feed back its status information after the completion of the local model training in the current round of federated learning. Additionally, specific status information may be specified as at least one of the following: load condition of clients (for example, NF load) and resource usage (for example, resource usage including CPU, memory, disk, and/or GPU) of client.

The information used for indicating that the second communication device needs to feed back model performance information is mainly used for describing that after completion of local model training of this round of federated learning, the second communication device needs to feed back model performance information before start and/or after completion of the local model training. The model performance information includes the foregoing first model performance information and/or second model performance information.

Optionally, the sending third information may include at least one of the following:

the first communication device sends the third information to the second communication device according to a predefined policy; where the predefined policy may indicate when or under what conditions the first communication device sends the third information to the second communication device, for example, sending the third information to the second communication device after every five rounds of training, or sending the third information to this second communication device after a specific second communication device has participated in five rounds of training. The predefined policy may not only indicate whether or not the second device needs to provide feedback but also specify when or under what conditions to seek feedback. For example, if the predefined policy indicates that the second communication device needs to feed back the first information, the first communication device may send the third information to the second communication device; and if the predefined policy indicates that the second communication device does not need to feed back the first information, the first communication device will not send the third information to the second communication device. The predefined policy may be predefined or prescribed by a protocol.

The first communication device sends the third information to the second communication device based on the needs in the process of model training of federated learning. For example, if the first communication device expects to determine, based on the willingness, status, and/or model performance of the second communication device, whether the second communication device participate in the next round of federated learning, it may send the third information to the second communication device; otherwise, it will not send the third information to the second communication device. In other words, the first communication device may autonomously determine whether to send the third information to the second communication device.

Optionally, the sending the third information may include: sending a first request to the second communication device, where the first request is used to request the second communication device to participate in federated learning, and the first request carries the third information. In this way, the third information may be sent by means of the first request used for requesting the second communication device to participate in federated learning, thereby reducing signaling consumption and the number of interactions.

In this embodiment of this application, if the first communication device receives multiple model performance information from multiple second communication devices, it may first aggregate the multiple model performance information to obtain third model performance information; and then, based on the third model performance information, determine whether the model training is terminated, for example, whether the model has converged. For example, if the third model performance information includes accuracy and the accuracy is higher than a preset threshold, it may be determined that the model training is terminated; otherwise, the model training is continued; or if the third model performance information includes mean absolute error MAE and the MAE is lower than a preset threshold, it may be determined that the model training is terminated; otherwise, the model training is continued.

Optionally, the foregoing aggregation method includes but is not limited to: computing an average value of the multiple model performance information, or computing a weighted average value of the multiple model performance information. In the case of computing a weighted average value, corresponding weights may be determined by the first communication device, for example, using predefined or self-computed weights.

In some embodiments, the first communication device aggregates multiple first model performance information (that is, model performance information after completion of local model training) and determines, based on the aggregated model performance information, whether the model training is terminated.

Further, after obtaining the third model performance information, the first communication device may feed back the third model performance information to a model consumer so as to facilitate the model consumer in understanding the model performance.

The foregoing embodiments mainly explain this application from the perspective of the first communication device (that is, the server in federated learning). Below, this application will be explained from the perspective of the second communication device (that is, the client in federated learning).

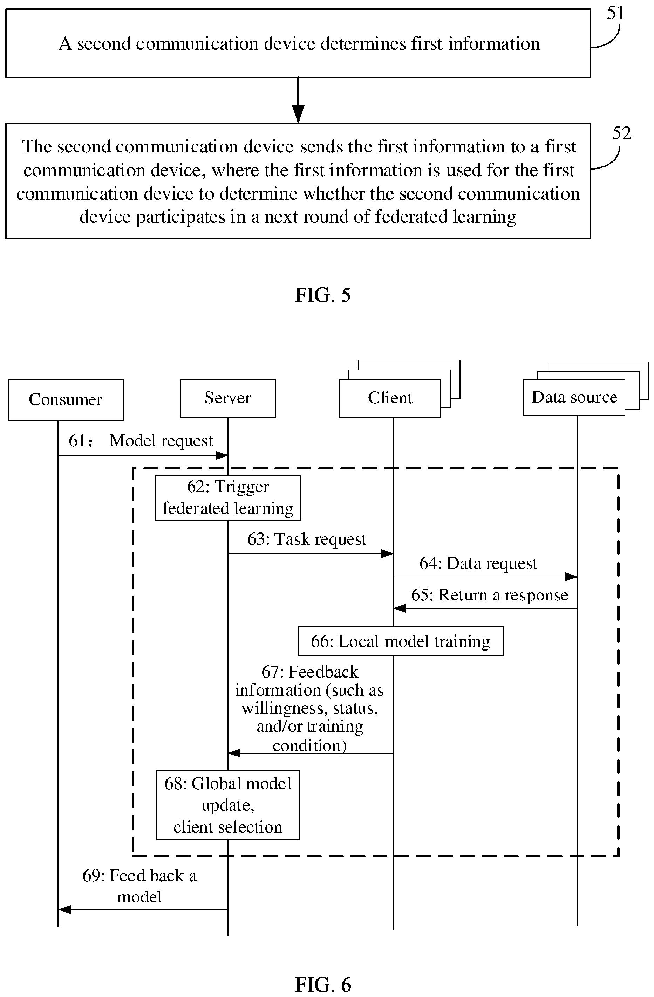

Referring to FIG. 5, FIG. 5 is a flowchart of a federated learning method according to an embodiment of this application. The method is applied to a second communication device, where the second communication device specifically is a client (client) in federated learning, including but not limited to a terminal and an intelligent network element device such as MTLF. As shown in FIG. 5, the method includes the following steps.

Step 51: The second communication device determines first information.

Step 52: The second communication device sends the first information to a first communication device, where the first information is used for the first communication device to determine whether the second communication device participates in a next round of federated learning.

In this embodiment, the first information includes but is not limited to at least one of the following: second information used for indicating whether a second communication device agrees to participate in federated learning, status information of the second communication device in a current round of federated learning, and model performance information of a current round of federated learning.

The first communication device specifically is a server (server) in federated learning, including but not limited to an intelligent network element device such as MTLF.

In some embodiments, the first information may be proactively reported by the second communication device (that is, a client in federated learning), for example, fed back to a server in federated learning together with a result of local training, so as to reduce signaling consumption and the number of interactions.

In the federated learning method in this embodiment of this application, the first information is sent to the first communication device, where the first information includes at least one of the following: second information indicating whether the second communication device agrees to participate in federated learning, status information of the second communication device in the current round of federated learning, first model performance information after completion of local model training of the current round of federated learning, and second model performance information before start of local model training in the current round of federated learning, so that the first communication device may determine, based on the willingness, status information, and/or model performance of the second communication device, whether the second communication device participates in the next round of federated learning, which achieves the rational selection of clients participating in federated learning and improves training efficiency, for example, avoiding the straggling of clients (that is, clients not feeding back results within a specified time), and selecting clients who can bring higher efficiency.

In this embodiment of this application, the status information may be used for describing the status information of the second communication device (that is, a client in federated learning) after completion of local training in the current round of federated learning, including but not limited to at least one of the following:

(1) Load information of the second communication device in the current round of federated learning.

In this embodiment, the load information may be understood as load condition information, and may represent a load condition of NF.

Optionally, the load information may include at least one of the following: average load information, peak load information, and the like. The average load information may be understood as an average load value within the scope of the current round of federated learning. For example, during a round of local training, the average load of a client is 70%, and the peak load is 80%.

(2) Resource usage information of the second communication device in the current round of federated learning.

Optionally, the resource usage information may include at least one of the following: average resource usage information and peak resource usage information. The average resource usage information may be understood as an average resource usage condition within the scope of the current round of federated learning.

For example, a resource usage (resource usage) side corresponding to the resource usage information may include but is not limited to a central processing unit (Central Processing Unit, CPU), a memory (memory), a disk (disk), and a graphics processing unit (Graphics Processing Unit, GPU). The resource usage information may include power information.

For example, during a round of local training, the average resource usage condition of a client is: CPU usage 60%, GPU usage 80%, memory usage 70% (for example, occupying 12GB, expressed in numerical terms), and disk space usage 40%; and the peak resource usage condition of the client is: CPU usage 80%, GPU usage 100%, memory usage 80% (for example, occupying 14GB, expressed in numerical terms), and disk space usage 50%.

In this embodiment of this application, the model performance information may be optionally model performance information before and/or after local model training, and may include at least one of the following:

first model performance information after completion of local model training; and
second model performance information before start of local model training.

Optionally, the model performance information may include at least one of the following: accuracy and mean absolute error MAE. For example, the first model performance information may include accuracy and mean absolute error MAE. The second model performance information may include accuracy and mean absolute error MAE.

In this embodiment of this application, whether the second communication device feeds back the first information may be determined by the first communication device. The determining first information may include: receiving third information from the first communication device first, where the third information is used for indicating that the second communication device needs to feed back the first information; and determining the first information based on the third information.

Optionally, the third information may include but is not limited to at least one of the following:

information used for indicating that the second communication device needs to feed back the second information, for example, the information is a flag indicating that the second information needs to be fed back;
information used for indicating that the second communication device needs to feed back the status information, for example, the information is a flag indicating that status information needs to be fed back; and
information used for indicating that the second communication device needs to feed back model performance information, for example, the information includes a flag indicating that the model performance information after completion of local model training needs to be fed back, and/or a flag indicating that the model performance information before start of local model training needs to be fed back.

Optionally, the receiving third information from the first communication device may include: receiving a first request from the first communication device, where the first request is used to request the second communication device to participate in federated learning, and the first request carries the third information. In this way, the third information may be sent by means of the first request used for requesting the second communication device to participate in federated learning, thereby reducing signaling consumption and the number of interactions.

The federated learning process in this embodiment of this application is described below with reference to FIG. 6.

In this embodiment of this application, a federated learning server (server) is NWDAF (for example, MTLF), and federated learning clients (clients) are NWDAFs (for example, MTLFs). As shown in FIG. 6, the specific federated learning process includes the following steps.

Step 61. A federated learning consumer (for example, NWDAF (AnLF)) sends a model request (for example, Nnwdaf_MLModelProvision_Subscribe) to the federated learning server (for example, NWDAF (MTLF)), where the model request is used to request obtaining a model to complete a task of the federated learning consumer. At this point, the server determines, based on a local configuration or the request of the federated learning consumer, whether or not to trigger federated learning, initiates federated learning, and performs client selection.

Step 62. If federated learning is triggered, the server, when selecting a client, may initialize and formulate strategies for federated learning, for example, setting rules for collecting status information after how many rounds of training, and/or collecting model performance information after how many rounds of training.

Step 63. The server sends federated learning task requests (for example, Nnwdaf_MLModelTraining_Subscribe) to various clients (clients) to request to participate in federated learning and performs local training of federated learning based on a global model and local data of these clients. The task request may include a task flag (for example, analytic ID), model initialization information (for example, containing training parameter training parameters), information used for indicating the need to feed back status information/model performance information (that is, feedback requirement feedback requirement), and the like.

The analytic ID is mainly used for indicating which task a corresponding model is used for. The model initialization information is used for describing a model, configuration information in this round of federated learning, and the like. The describing a model means describing the model itself, for example, what algorithm, architecture, parameters, and hyperparameters the model is composed of, or the model itself, for example, a model file and an address information of the model file. The configuration information in this round of federated learning is information such as the number of rounds of local training to be performed and a type of data to be used during the process of local training in this round of federated learning. For the information used for indicating the need to feed back status information/model performance information, refer to the foregoing embodiments. Details are not repeated herein.

Step 64. The clients each send a request (for example, Ndccf_DataManagement_Subscribe/Nnf_EventExposure_Subscribe) for obtaining data to regions or data sources (data source) to which it belongs, to collect data for local model training. Network elements that provide data vary depending on different tasks, and may be, for example, UPF, OAM, and UDM.

Step 65. The data sources each return a response to the corresponding clients, with the response containing the requested data, such as Ndccf_DataManagement_Notify/Nnf_EventExposure_Notify.

Step 66. The clients each use the data obtained in steps 64 and 65 to perform local model training, generate intermediate results, feed back the intermediate results to the server in subsequent steps for the server to aggregate and update the global model, and analyze the model performance using local data.

For example, the analyzing model performance may be computing accuracy or MAE using the locally trained model and the local data. If the task request in step 63 carries flag information indicating the need to feed back model performance information before local training, the clients need to perform statistical computing of model performance before local training.

In one implementation, the clients NWDAFs each divide the number of correct model prediction results by the total number of predictions to obtain the local training accuracy of the model, where the formula is: local training accuracy = number of correct results ÷ total number of predictions. Specifically, the clients NWDAFs each may set up a validation dataset to evaluate accuracy of local training. The validation dataset includes input data (input data) for the model and true label data (label/ground truth). The clients NWDAFs each input the input data into the trained model to obtain output data, then compare the output data with the true label data to check whether they match, and uses the foregoing formula to obtain a value of accuracy of the local training. Note: The concept of correct prediction result does not necessarily mean that the result must be completely consistent with the label data. When there is a certain difference between the two, but this difference is within the allowable range, the prediction result may also be considered correct.

In one implementation, the clients NWDAFs each calculate the MAE by computing a mean of the sum of squared errors between predicted data and label data (label values, original data) at corresponding points, as shown in the following formula for local training:

$$\text{MAE} = \frac{1}{n} \sum_{i=1}^{n} |(y_i - \hat{y}_i)|$$

. Specifically, the clients NWDAFs each may set up a validation dataset to evaluate accuracy of local training. The validation dataset includes input data (input data) for the model and true label data (label/ground truth, that is, $\hat{y}$ in the foregoing formula). The clients NWDAFs each input the input data into the trained model to obtain output data (that is, predicted data y), next compare the output data with the actual label data to compute a mean of the sum of squared errors, and uses the foregoing formula to obtain a value of MAE of the local training.

Step 67. The clients each proactively or as required in step 63 feed back the intermediate results of completed local training and information such as willingness, status, and/or model performance (the first information) to the server, for example, may feed back the willingness, status, and/or model performance information through feedback messages corresponding to the request messages in the process of federated learning training, where the feedback message is optionally a notification (notify) message.

In one implementation, if the clients client each discover that their training conditions are going quite well, such as accuracy reaching a certain threshold (this threshold may be carried in model initialization information in step 63, or carried in a model request, or obtained/preconfigured in advance), they can proactively feed back model performance information. Alternatively, the clients client each may proactively feed back its willingness, status, and/or model performance information in each round. The server may use the intermediate results to update the global model and use information such as the willingness, status, and/or model performance to assist in selecting clients for the next round of federated learning.

Step 68. The server aggregates the intermediate results based on the feedback and updates the global model, and determines, based on the feedback of the willingness, status, and/or model performance information, whether the corresponding clients still need to participate in the next round of federated learning. In addition, an overall/global training condition of the model may be obtained by aggregating model performance information.

For example, after obtaining the intermediate results fed back by the clients, the server may aggregate these intermediate results using its algorithm, such as averaging, weighted averaging, and then use these intermediate results to update the global model. For another example, the server may determine whether a client can still participate in the next round of federated learning based on the feedback on the willingness, status, and/or model performance information fed back by the client. If the client indicates in its willingness information that it will leave federated learning, the server will not select that client for the next round of federated learning. For another example, if the feedback status information from the client shows CPU usage at 90%, GPU usage at 100%, memory usage at 80% (for example, 14GB, expressed in numerical terms), and disk space usage at 50%, the server would consider that the client is not suitable for participation in federated learning anymore, because the GPU is already fully used during local training, and the next training might take longer or disconnect. Therefore, the server would not select that client in the next round. For yet another example, if the feedback model performance of the client shows an accuracy of 98%, while model performance fed back by other clients is generally between 60% and 80%, the server may consider the model has been overfitted in the environment of the client and the training of the client needs to be paused, thus not selecting that client in the next round.

It should be noted that the aggregating model performance information to obtain the overall/global training condition of the model means that the server collects the model performance information from various clients and uses methods such as averaging or weighted averaging to generate an overall training condition. For example, it is consumed that five clients participate in federated learning and they feed back the model performance, such as accuracies of 70%, 72%, 75%, 68%, and 65%. The server may compute an average value of these accuracies to obtain an overall training condition, to be specific, the overall training accuracy is (70%+72%+75%+68%+65%)/5=70%.

After the reselection of clients is completed, steps 63 to 68 may be repeated until the model converges.

Step 69. After the model training of federated learning is completed, the server feeds back the trained model and overall/global model performance to the consumer (for example, AnLF).

The federated learning method according to this embodiment of this application may be executed by a federated learning apparatus. In the embodiments of this application, the federated learning apparatus executing the federated learning method is used as an example to describe the federated learning apparatus according to the embodiments of this application.

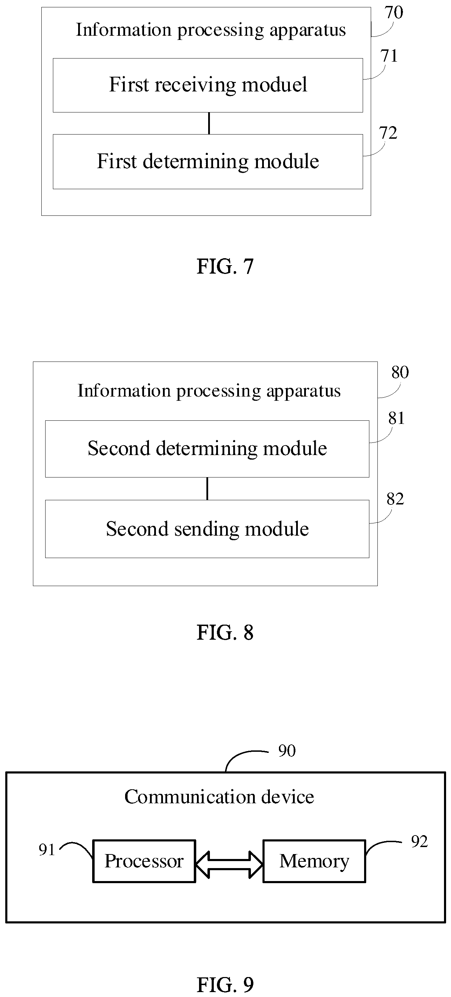

Referring to FIG. 7, FIG. 7 is a schematic structural diagram of a federated learning apparatus according to an embodiment of this application. The apparatus is applied to a first communication device. The first communication device is specifically a server (server) in federated learning, including but not limited to an intelligent network element device such as MTLF. As shown in FIG. 7, the federated learning apparatus 70 may include:

a first receiving module 71, configured to receive first information from a second communication device, where the first information includes at least one of the following: second information used for indicating whether the second communication device agrees to participate in federated learning, status information of the second communication device in a current round of federated learning, and model performance information of a current round of federated learning; and
a first determining module 72, configured to determine, based on the first information, whether the second communication device participates in a next round of federated learning.

Optionally, the status information includes at least one of the following:

load information; and
resource usage information.

Optionally, the load information includes at least one of the following: average load information and peak load information; and
the resource usage information includes at least one of the following: average resource usage information and peak resource usage information.

Optionally, the model performance information includes at least one of the following:

first model performance information after completion of local model training; and
second model performance information before start of local model training.

Optionally, the model performance information includes at least one of the following: accuracy, mean absolute error, precision, and mean squared error.

Optionally, the federated learning apparatus 70 further includes:
a first sending module, configured to send third information to the second communication device, where the third information is used for indicating that the second communication device needs to feed back the first information.

Optionally, the third information includes at least one of the following:

information used for indicating that the second communication device needs to feed back the second information, for example, the information is a flag indicating that the second information needs to be fed back;

information used for indicating that the second communication device needs to feed back the status information; and

information used for indicating that the second communication device needs to feed back the model performance information.

Optionally, the first sending module is specifically configured to perform at least one of the following:

sending the third information to the second communication device according to a predefined policy; and sending the third information to the second communication device according to a requirement in a model training process based on federated learning.

Optionally, the first sending module is specifically configured to send a first request to the second communication device, where the first request is used to request the second communication device to participate in federated learning, and the first request carries the third information.

Optionally, the federated learning apparatus 70 further includes:

a processing module, configured to aggregate multiple model performance information when the first communication device receives multiple model performance information from multiple second communication devices, to obtain third model performance information, and determine, based on the third model performance information, whether the model training is terminated.

Optionally, the federated learning apparatus 70 further includes:

a feedback module, configured to feed back the third model performance information to a model consumer.

Optionally, the federated learning apparatus 70 further includes:

a selection module, configured to select, based on the first information, a third communication device to participate in a next round of federated learning. The third communication device is different from the second communication device, and specifically is a new client (client) device participating in federated learning, including but not limited to a terminal and an intelligent network element device such as MTLF. For example, if it is determined based on the received first information that many clients are no longer suitable for participating in the next round of federated learning, new clients may be selected to participate in the next round of federated learning, so as to ensure the smooth progress of federated learning.

The federated learning apparatus 70 according to this embodiment of this application can implement the processes implemented by the method embodiment in FIG. 4, with the same technical effects achieved. To avoid repetition, details are not described herein again.

Referring to FIG. 8, FIG. 8 is a schematic structural diagram of a federated learning apparatus according to an embodiment of this application. The apparatus is applied to a second communication device. The second communication device is specifically a client (client) in federated learning, including but not limited to a terminal and an intelligent network element device such as MTLF. As shown in FIG. 8, the federated learning apparatus 80 includes:

a second determining module 81, configured to determine first information, where the first information includes at least one of the following: second information used for indicating whether a second communication device agrees to participate in federated learning, status information of the second communication device in a current round of federated learning, and model performance information of a current round of federated learning; and

a second sending module 82, configured to send the first information to a first communication device, where the first information is used for the first communication device to determine whether the second communication device participates in a next round of federated learning.

Optionally, the status information includes at least one of the following:

load information; and resource usage information.

Optionally, the load information includes at least one of the following: average load information and peak load information; and

the resource usage information includes at least one of the following: average resource usage information and peak resource usage information.

Optionally, the model performance information includes at least one of the following:

first model performance information after completion of local model training; and

second model performance information before start of local model training.

Optionally, the model performance information includes at least one of the following: accuracy, mean absolute error, precision, and mean squared error.

Optionally, the federated learning apparatus 80 includes:

a second receiving module, configured to receive third information from the first communication device, where the third information is used for indicating that the second communication device needs to feed back the first information; and

the second determining module 81 is specifically configured to determine the first information based on the third information.

Optionally, the second receiving module is further configured to receive a first request from the first communication device, where the first request is used to request the second communication device to participate in federated learning, and the first request carries the third information.

The federated learning apparatus 80 according to this embodiment of this application can implement the processes implemented by the method embodiment in FIG. 5, with the same technical effects achieved. To avoid repetition, details are not described herein again.

Optionally, as shown in FIG. 9, an embodiment of this application further provides a communication device 90, including a processor 91 and a memory 92, where the memory 92 stores a program or instructions capable of running on the processor 91. For example, when the communication device 90 is a first communication device, the program or instructions are executed by the processor 91 to implement the steps of the foregoing embodiment of the federated learning method shown in FIG. 4, with the same technical effects achieved. In a case that the communication device 90 is a second communication device, when the program or instructions are executed by the processor 91, the steps of the foregoing embodiment of the federated learning method shown in FIG. 5 above are implemented, with the same beneficial effects achieved. To avoid repetition, details are not described herein again.

An embodiment of this application further provides a communication device, including a processor and a communication interface. For example, when the communication device is a first communication device, the communication interface is configured to receive first information from a second communication device, and the processor is configured to determine, based on the first information, whether the second communication device participates in a next round of federated learning; or when the communication device is a second communication device, the processor is configured to determine first information, and the communication interface is configured to send the first information to a first communication device, where the first information includes at least one of the following: second information indicating whether the second communication device agrees to participate in federated learning, status information of the second communication device in a current round of federated learning, first model performance information after completion of local model training of the current round of federated learning, and second model performance information before start of local model training of the current round of federated learning. This embodiment corresponds to the foregoing method embodiment. All implementations in the foregoing method embodiment may be applicable to this embodiment, with the same technical effects achieved.

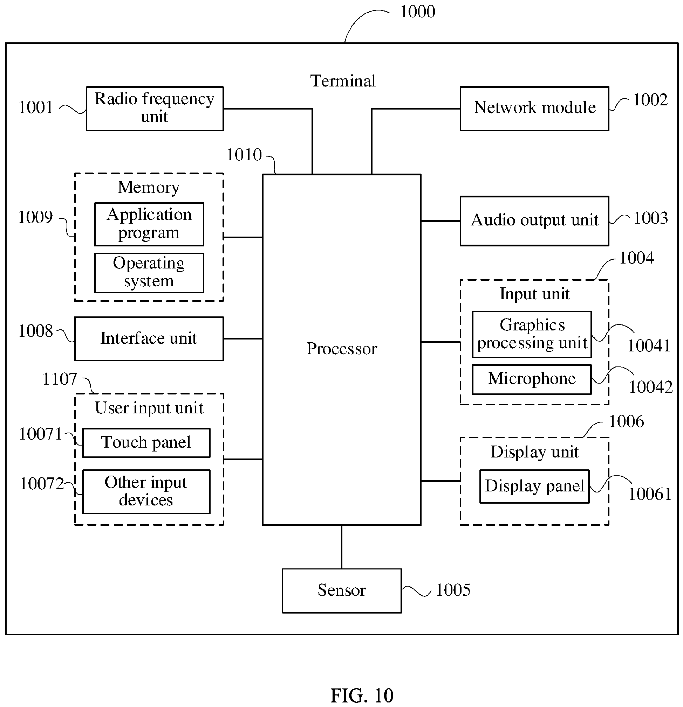

Specifically, FIG. 10 is a schematic structural diagram of hardware of a terminal for implementing embodiments of this application.

The terminal 1000 includes, but is not limited to, at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) for supplying power to the components. The power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (for example, a volume control key or a power on/off key), a trackball, a mouse, and a joystick. Details are not described herein.

In this embodiment, after receiving downlink data from a network-side device, the radio frequency unit 1001 may transmit the downlink data to the processor 1010 for processing. In addition, the radio frequency unit 1001 may transmit uplink data to the network-side device. Generally, the radio frequency unit 1001 includes but is not limited to an antenna, an amplifier, a transceiver, a coupler, a low noise amplifier, and a duplexer.

The memory 1009 may be configured to store software programs or instructions and various data. The memory 1009 may include first storage area for storing programs or instructions and a second storage area for storing data. The first storage area may store an operating system, an application program or instruction required by at least one function (for example, a sound playback function or an image playback function), and the like. In addition, the memory 1009 may include either a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, an application processor and a modem processor are integrated in the processor 1010. The application processor primarily processes operations relating to an operating system, user interfaces, application programs, and the like. The modem processor primarily processes radio communication signals, for example, being a baseband processor. It can be understood that the modem processor may alternatively be not integrated in the processor 1010.

Optionally, the terminal 1000 may serve as a client in federated learning, and the processor 1010 is configured to determine the first information;

the radio frequency unit 1001 is configured to send the first information to a server in federated learning, where the first information is used for the server to determine whether the terminal 1000 participates in the next round of federated learning; where the first information includes at least one of the following: second information used for indicating whether terminal 1000 agrees to participate in federated learning, status information of the terminal 1000 in a current round of federated learning, and model performance information of a current round of federated learning.

The terminal 1000 according to this embodiment of this application can implement the processes implemented by the method embodiment in FIG. 5 with the same technical effects achieved. To avoid repetition, details are not described herein again.

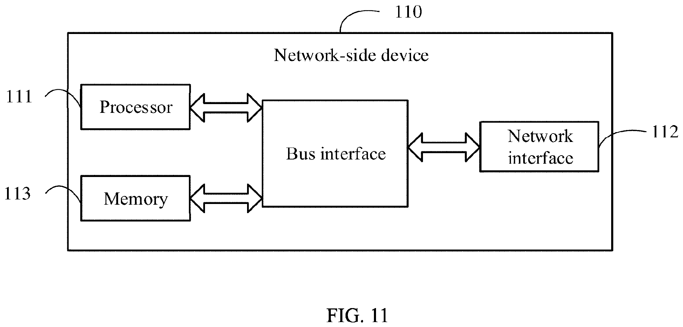

Specifically, an embodiment of this application further provides a network-side device. As shown in FIG. 11, the network-side device 110 includes a processor 111, a network interface 112, a memory 113. The network interface 112 may be, for example, a common public radio interface (common public radio interface, CPRI).

Specifically, the network-side device 110 in this embodiment of this application further includes: instructions or a program stored in the memory 113 and capable of running on the processor 111. The processor 111 invokes the instructions or program in the memory 113 to execute the method executed by the modules shown in FIG. 7 and/or FIG. 8, with the same technical effects achieved. To avoid repetition, details are not described herein again.

An embodiment of this application further provides a readable storage medium. The readable storage medium stores a program or instructions. When the program or instructions are executed by a processor, each process of the foregoing federated learning method embodiment is implemented, with the same technical effect achieved. To avoid repetition, details are not described herein again.

The processor is a processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions to implement each process of the foregoing federated learning method embodiment, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing federated learning method embodiments, with the same technical effects achieved. To avoid repetition, the details are not repeated herein.

An embodiment of this application further provides a communication system, including the first communication device and the second communication device as described above, where the first communication device may be configured to perform the steps of the federated learning method as shown in FIG. 4, and the second communication device may be configured to perform the steps of the federated learning method as shown in FIG. 5.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a software product. The computer software product may be stored in a storage medium (for example, a ROM/RAM, a magnetic disk, or an optical disc), and includes several instructions for instructing a terminal device (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A federated learning method, comprising:

   receiving, by a first communication device, first information from a second communication device, wherein the first information comprises at least one of the following: second information used for indicating whether the second communication device agrees to participate in federated learning, status information of the second communication device in a current round of federated learning, model performance information of a current round of federated learning, and information used for indicating willingness of the second communication device to leave federated learning; and
   determining, by the first communication device based on the first information, whether the second communication device participates in a next round of federated learning.

2. The method according to claim 1, wherein the status information comprises at least one of the following:

   load information; and
   resource usage information.

3. The method according to claim 2, wherein the load information comprises at least one of the following: average load information and peak load information; and
   the resource usage information comprises at least one of the following: average resource usage information and peak resource usage information.

4. The method according to claim 1, wherein the model performance information comprises at least one of the following:

   first model performance information after completion of local model training; and
   second model performance information before start of local model training.

5. The method according to claim 1, wherein the model performance information comprises at least one of the following: accuracy, mean absolute error, precision, and mean squared error.

6. The method according to claim 1, wherein the method further comprises:
   sending, by the first communication device, third information to the second communication device, wherein the third information is used for indicating that the second communication device needs to feed back the first information.

7. The method according to claim 6, wherein the third information comprises at least one of the following:

   information used for indicating that the second communication device needs to feed back the second information;
   information used for indicating that the second communication device needs to feed back the status information; and
   information used for indicating that the second communication device needs to feed back the model performance information.

8. The method according to claim 6, wherein the sending third information to the second communication device comprises at least one of the following:

sending, by the first communication device, the third information to the second communication device according to a predefined policy; and sending, by the first communication device, the third information to the second communication device according to a requirement in a model training process based on federated learning.

9. The method according to claim 6, wherein the sending third information to the second communication device comprises:
sending, by the first communication device, a first request to the second communication device, wherein the first request is used to request the second communication device to participate in federated learning, and the first request carries the third information.

10. The method according to claim 1, wherein if the first communication device receives multiple model performance information from a plurality of second communication devices, the method further comprises:

aggregating, by the first communication device, the multiple model performance information to obtain third model performance information; and determining, by the first communication device based on the third model performance information, whether the model training is terminated.

11. The method according to claim 10, wherein after the obtaining third model performance information, the method further comprises:
feeding back, by the first communication device, the third model performance information to a model consumer.

12. The method according to claim 1, wherein after the receiving first information, the method further comprises:
selecting, by the first communication device based on the first information, a third communication device to participate in a next round of federated learning, wherein the third communication device is different from the second communication device and is a new client device participating in federated learning.

13. A federated learning method, comprising:

determining, by a second communication device, first information, wherein the first information comprises at least one of the following: second information used for indicating whether the second communication device agrees to participate in federated learning, status information of the second communication device in a current round of federated learning, model performance information of a current round of federated learning, and information used for indicating willingness of the second communication device to leave federated learning; and sending, by the second communication device, the first information to a first communication device, wherein the first information is used for the first communication device to determine whether the second communication device participates in a next round of federated learning.

14. The method according to claim 13, wherein the status information comprises at least one of the following:

load information; and resource usage information.

15. The method according to claim 13, wherein the model performance information comprises at least one of the following:

first model performance information after completion of local model training; and second model performance information before start of local model training.

16. The method according to claim 13, wherein the determining first information comprises:

receiving, by the second communication device, third information from the first communication device, wherein the third information is used for indicating that the second communication device needs to feed back the first information; and determining, by the second communication device, the first information based on the third information.

17. The method according to claim 16, wherein the receiving third information from the first communication device comprises:
receiving, by the second communication device, a first request from the first communication device, wherein the first request is used to request the second communication device to participate in federated learning, and the first request carries the third information.

18. A federated learning apparatus, comprising:

a first receiving module, configured to receive first information from a second communication device, wherein the first information comprises at least one of the following: second information used for indicating whether the second communication device agrees to participate in federated learning, status information of the second communication device in a current round of federated learning, model performance information of a current round of federated learning, and information used for indicating willingness of the second communication device to leave federated learning; and
a first determining module, configured to determine, based on the first information, whether the second communication device participates in a next round of federated learning.

19. A federated learning apparatus, comprising:

a second determining module, configured to determine first information, wherein the first information comprises at least one of the following: second information used for indicating whether a second communication device agrees to participate in federated learning, status information of the second communication device in a current round of federated learning, model performance information of a current round of federated learning, and information used for indicating willingness of the second communication device to leave federated learning; and
a second sending module, configured to send the first information to a first communication device, wherein the first information is used for the first communication device to determine whether the second communication device participates in a next round of federated learning.

20. A communication device, comprising a processor and a memory, wherein the memory stores a program or instructions capable of running on the processor, and when the program or the instructions are executed by the processor, the steps of the federated learning method according to any one of claims 1 to 12 are implemented, or the steps of the federated learning method according to any one of claims 13 to 17 are implemented.

21. A readable storage medium, wherein the readable storage medium has a program or instructions stored thereon; and when the program or the instructions are executed by a processor, the steps of the federated learning method according to any one of claims 1 to 12 are implemented, or the steps of the federated learning method according to any one of claims 13 to 17 are implemented.

FIG. 1

FIG. 2

FIG. 3

A first communication device receives first information from a second communication device — 41

The first communication device determines, based on the first information, whether the second communication device participates in a next round of federated learning — 42

FIG. 4

| | 51 |
|---|---|
| A second communication device determines first information | |

| | 52 |
|---|---|
| The second communication device sends the first information to a first communication device, where the first information is used for the first communication device to determine whether the second communication device participates in a next round of federated learning | |

FIG. 5

Consumer    Server    Client    Data source

61:   Model request

62: Trigger
federated learning

63: Task request

64: Data request

65: Return a response

66: Local model training

67: Feedback
information (such as
willingness, status,
and/or training
condition)

68: Global model
update,
client selection

69: Feed back a
model

FIG. 6

Information processing apparatus — 70

First receiving moduel — 71

First determining module — 72

FIG. 7

Information processing apparatus — 80

Second determining module — 81

Second sending module — 82

FIG. 8

Communication device — 90

91 — Processor ⟷ Memory — 92

FIG. 9

1000

Terminal

1001 — Radio frequency unit

Network module — 1002

1010

Memory

1009 — Application program

Operating system

Processor

Audio output unit — 1003

1004

Input unit

Graphics processing unit — 10041

Microphone — 10042

1008 — Interface unit

1107

User input unit

10071 — Touch panel

10072 — Other input devices

1006

Display unit

Display panel — 10061

Sensor — 1005

FIG. 10

110

Network-side device

111

Processor

Bus interface

Network interface

112

113

Memory

FIG. 11

## INTERNATIONAL SEARCH REPORT

| International application No. |
| --- |
| **PCT/CN2023/106114** |

### A. CLASSIFICATION OF SUBJECT MATTER

H04W8/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, VEN, CNKI: 联邦学习, 同意, 愿意, 意愿, 参加, 状态, 负载, 资源, 模型, federal, learning, agree, willingness, state, load, resource, model

### C. DOCUMENTS CONSIDERED TO BE RELEVANT

| Category* | Citation of document, with indication, where appropriate, of the relevant passages | Relevant to claim No. |
| --- | --- | --- |
| X | CN 114079902 A (GUANGDONG OPPO MOBILE COMMUNICATIONS CO., LTD.) 22 February 2022 (2022-02-22)<br>description, paragraphs 2-78 | 1-21 |
| A | CN 113723620 A (HITACHI LTD.) 30 November 2021 (2021-11-30)<br>entire document | 1-21 |
| A | CN 113988319 A (SHENZHEN QIANHAI WEBANK CO., LTD.) 28 January 2022 (2022-01-28)<br>entire document | 1-21 |
| A | CN 114444708 A (HUAWEI TECHNOLOGIES CO., LTD.) 06 May 2022 (2022-05-06)<br>entire document | 1-21 |
| A | WO 2022111639 A1 (HUAWEI TECHNOLOGIES CO., LTD.) 02 June 2022 (2022-06-02)<br>entire document | 1-21 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 October 2023** | **13 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/106114**

| Patent document cited in search report | | | Publication date (day/month/year) | Patent family member(s) | | | Publication date (day/month/year) |
|---|---|---|---|---|---|---|---|
| CN | 114079902 | A | 22 February 2022 | None | | | |
| CN | 113723620 | A | 30 November 2021 | None | | | |
| CN | 113988319 | A | 28 January 2022 | None | | | |
| CN | 114444708 | A | 06 May 2022 | None | | | |
| WO | 2022111639 | A1 | 02 June 2022 | EP | 4235522 | A1 | 30 August 2023 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210815546